# EUROPÄISCHE PATENTANMELDUNG

(11) **EP 3 832 858 A1**
(43) Veröffentlichungstag der Anmeldung: **09.06.2021**
(21) Anmeldenummer: 19212811.4
(22) Anmeldetag: 02.12.2019
(51) Int. Cl.: H02K 11/20, H02K 11/35

(54) **ANORDNUNG MIT EINER ELEKTRISCHEN ROTIERENDEN MASCHINE**

(71) Anmelder: Siemens Aktiengesellschaft, 80333 München (DE)
(72) Erfinder: Scheibner, Dirk, 90473 Nürnberg (DE); Schimmer, Jürgen, 90473 Nürnberg (DE); Wiegand, Hermann-Josef, 36169 Rasdorf (DE); Zettner, Jürgen, 90587 Veitsbronn (DE); Meyer, Martin, 90425 Nürnberg (DE)

(57) **Zusammenfassung**

Die Erfindung betrifft eine Anordnung mit einer elektrischen rotierenden Maschine (2), die eine in einem Gehäuse (18) mittels zumindest eines Lagers (16) drehbar gelagerte Welle (12) aufweist, und mit einer Messeinrichtung (M) zur Lagerstromüberwachung, welche eine Messkapazität (C) und eine Auswerteeinrichtung (24) aufweist, wobei die Messkapazität (C) durch einen Spalt (S) zwischen einem stehenden Teil und einem mit der Welle (12) rotierenden Teil der elektrischen rotierenden Maschine (2) ausgebildet ist, wobei die Auswerteeinrichtung (24) dafür ausgelegt ist, im Falle eines Lagerstromereignisses einen durch die Messkapazität (C) fließenden elektrischen Verschiebestrom (i) zu erfassen und ein einen Lagerstromfluss anzeigendes Messsignal zu erzeugen, falls der Verschiebestrom (i) oder eine mit diesem Verschiebestrom (i) gebildete Messgröße ein vorgegebenes Auslösekriterium erfüllt. Um eine möglichst einfache und kostengünstige Lagerstromüberwachung zu ermöglichen, wird vorgeschlagen, dass die Messkapazität (C) durch bereits vorhandene Komponenten der elektrischen rotierenden Maschine (2) ausgebildet ist.

## Beschreibung

Die Erfindung betrifft eine Anordnung mit einer elektrischen rotierenden Maschine.

Ferner betrifft die Erfindung ein Verfahren zur Lagerstromüberwachung einer elektrischen rotierenden Maschine.

Darüber hinaus betrifft die Verwendung bereits vorhandener Komponenten einer elektrischen rotierenden Maschine zur Ausbildung einer Messkapazität bei einer Lagerstromüberwachung der elektrischen rotierenden Maschine.

Während des Betriebes einer elektrischen rotierenden Maschine, die beispielsweise als Synchronmaschine oder Asynchronmaschine ausgeführt und als Motor und/oder als Generator verwendbar ist, können Lagerströme auftreten. Durch derartige Lagerstromaktivitäten, die auf einer zeitlichen Änderung einer Spannung beruhen, kann es zu Funkenentladungen im Schmierspalt des Lagers kommen, die das Material der Lagerlaufflächen aufschmelzen und verdampfen, wodurch es zu einer Riffelbildung und dadurch zu einer, insbesondere deutlichen, Geräuschentwicklung kommen kann. Ferner wird durch derartige Lagerstromereignisse die Lebensdauer des Lagers reduziert, was ungeplante Stillstände und hohe Kosten zur Folge hat.

Die Offenlegungsschrift DE 10 2008 035 613 A1 beschreibt ein Verfahren zur Lagerstromüberwachung einer elektrischen Maschine. Es wird mit einer in einem Abstand zu einer Welle angeordneten Elektrode und mit der Welle - aufgrund des Spalts zwischen Elektrode und Welle - eine Messkapazität gebildet und ein elektrischer Verschiebestrom gemessen, der im Falle einer zeitlichen Änderung der zwischen der Welle und dem Gehäuse anliegenden Spannung durch die Messkapazität fließt. Ein einen Lagerstromfluss anzeigendes Messsignal wird erzeugt, wenn der Verschiebestrom oder eine mit dem Verschiebestrom gebildete Messgröße ein vorgegebenes Auslösekriterium erfüllt.

Die Offenlegungsschrift DE 10 2013 102 543 A1 beschreibt eine Vorrichtung, welche Folgendes umfasst: Einen kapazitiven Drehsensor in Form eines Kondensators, welcher eine erste und eine davon elektrisch isolierte zweite Kontaktierelektrode umfasst, zwischen welchen eine Kapazität gebildet ist, welche in Abhängigkeit eines Drehwinkels eines Aktuators des Drehsensors periodisch variiert, einen an den Kondensator gekoppelten Komparator, welcher eine zwischen der ersten und der zweiten Kontaktierelektrode des Kondensators abfallende Ladespannung mit einem oberen und einem unteren Schwellenwert vergleicht und basierend auf einem Ergebnis des Vergleichs ein Ausgangssignal an einem Ausgang des Komparators ausgibt, einen zwischen die erste Kontaktierelektrode und den Ausgang des Komparators gekoppelten Widerstand und einen an den Ausgang des Komparators gekoppelten Zähler.

Der Erfindung liegt die Aufgabe zugrunde, eine Anordnung mit einer elektrischen rotierenden Maschine bereitzustellen, die eine Lagerstromüberwachung möglichst einfach und kostengünstig ermöglicht.

Die Aufgabe wird erfindungsgemäß durch eine Anordnung mit einer elektrischen rotierenden Maschine gelöst, die eine in einem Gehäuse mittels zumindest eines Lagers drehbar gelagerte Welle aufweist, und mit einer Messeinrichtung zur Lagerstromüberwachung, welche eine Messkapazität und eine Auswerteeinrichtung aufweist, wobei die Messkapazität durch einen Spalt zwischen einem stehenden Teil und einem mit der Welle rotierenden Teil der elektrischen rotierenden Maschine ausgebildet ist, wobei die Auswerteeinrichtung dafür ausgelegt ist, im Falle eines Lagerstromereignisses einen durch die Messkapazität fließenden elektrischen Verschiebestrom zu erfassen und ein einen Lagerstromfluss anzeigendes Messsignal zu erzeugen, falls der Verschiebestrom oder eine mit diesem Verschiebestrom gebildete Messgröße ein vorgegebenes Auslösekriterium erfüllt, wobei die Messkapazität (C) durch bereits vorhandene Komponenten der elektrischen rotierenden Maschine ausgebildet ist.

Ferner wird die Aufgabe erfindungsgemäß durch ein Verfahren zur Lagerstromüberwachung einer elektrischen rotierenden Maschine, die eine in einem Gehäuse mittels zumindest eines Lagers drehbar gelagerte Welle aufweist, mittels einer Messeinrichtung, welche eine Messkapazität und eine Auswerteeinrichtung aufweist gelöst, wobei die Messkapazität durch einen Spalt zwischen einem stehenden Teil und einem mit der Welle rotierenden Teil der elektrischen rotierenden Maschine ausgebildet wird, wobei durch die Auswerteeinrichtung im Falle eines Lagerstromereignisses ein durch die Messkapazität fließender elektrischer Verschiebestrom erfasst wird und ein einen Lagerstromfluss anzeigendes Messsignal erzeugt wird, falls der Verschiebestrom oder eine mit diesem Verschiebestrom gebildete Messgröße ein vorgegebenes Auslösekriterium erfüllt, wobei bereits vorhandene Komponenten der elektrischen rotierenden Maschine als Messkapazität verwendet werden.

Darüber hinaus wird die Aufgabe erfindungsgemäß durch die Verwendung bereits vorhandener Komponenten einer elektrischen rotierenden Maschine zur Ausbildung einer Messkapazität bei einer Lagerstromüberwachung der elektrischen rotierenden Maschine gelöst.

Die in Bezug auf die elektrische rotierende Maschine nachstehend angeführten Vorteile und bevorzugten Ausgestaltungen lassen sich sinngemäß auf das Verfahren und die Verwendung übertragen.

Der Erfindung liegt die Überlegung zugrunde, eine Lagerstromüberwachung einer elektrischen rotierenden Maschine zu realisieren ohne zusätzliche Komponenten zu verwenden, um Kosten zu sparen und eine einfache Nachrüstung zu ermöglichen. Durch die Verwendung bereits vorhandener Komponenten der elektrischen rotierenden Maschine zur Ausbildung einer Messkapazität wird darüber der benötige Bauraum der elektrischen rotierenden Maschine reduziert. Bereits vorhandene Komponenten der elektrischen rotierenden Maschine sind beispielsweise eine Lüfterhaube, ein Gehäuse, ein Lüfterrad, eine Labyrinthdichtung und/oder ein Lagerdeckel. Mit Hilfe der bereits vorhandener Komponenten wird eine Messkapazität zwischen einem stehenden Teil und einem mit der Welle rotierenden Teil der elektrischen rotierenden Maschine ausgebildet. Der stehende Teil umfasst beispielsweise einen Stator und einen Lageraußenring. Der rotierende Teil umfasst beispielsweise einen Rotor mit einer Welle und einem Lagerinnenring, welcher drehfest mit der Welle verbunden ist. Über eine Auswerteeinrichtung wird, im Falle eines Lagerstromereignisses ein durch die Messkapazität fließender elektrischer Verschiebestrom erfasst. Ferner wird ein einen Lagerstromfluss anzeigendes Messsignal erzeugt, falls der Verschiebestrom oder eine mit diesem Verschiebestrom gebildete Messgröße ein vorgegebenes Auslösekriterium erfüllt. Die Auswerteeinrichtung weist beispielsweise einen Strom-Spannungs-Wandler mit einer Schutzschaltung auf, wobei der Strom-Spannungs-Wandler eine Spannung ausgibt, welche proportional zum Verschiebestrom ist. Eine derartige Analogschaltung ist einfach, kostengünstig, stromsparend und benötigt sehr wenig Bauraum. Die Auswertung findet optional zumindest teilweise in der zentralen IT-Infrastruktur IT statt. Eine zentrale IT-Infrastruktur IT ist beispielsweise mindestens ein lokales Computersystem und/oder mindestens ein, insbesondere cloudbasiertes, IoT-System. Die zentrale IT-Infrastruktur stellt Speicherplatz, Rechenleistung und/oder Anwendungssoftware bereit. In einem IoT-System werden Speicherplatz, Rechenleistung und/oder Anwendungssoftware als Dienstleistung über das Internet zur Verfügung gestellt.

In einer bevorzugten Ausgestaltung ist die Messkapazität, insbesondere stirnseitig, durch einen Spalt zwischen der Welle und einer, zumindest im Bereich des Spaltes, elektrisch leitfähigen, insbesondere metallischen, Lüfterhaube, welche elektrisch isoliert mit dem Gehäuse verbunden ist, ausgebildet. Insbesondere ist die Lüfterhaube aus einem elektrisch leitfähigen Werkstoff hergestellt. Insbesondere weist die Lüfterhaube zumindest in einem Bereich einer senkrechten Projektion einer Deckfläche der Welle einen metallischen Werkstoff auf. Die Verbindung der Lüfterhaube aus einem elektrisch leitfähigen Werkstoff erfolgt insbesondere über ein isolierendes Element, welches beispielsweise aus einem dielektrischen Werkstoff hergestellt ist. Dielektrische Werkstoffe sind beispielsweise thermoplastische Kunststoffe wie Polyethylen, Duroplaste wie Epoxidharz oder keramische Werkstoffe wie Aluminiumoxid. Ein elektrisch leitfähiger Werkstoff weist eine elektrische Leitfähigkeit von mindestens 1 10⁶ S/m auf. Ein elektrisch leitfähiger Werkstoff ist beispielsweise ein Metall oder ein elektrisch leitfähiger Kunststoff. Alternativ ist die Lüfterhaube aus einem elektrisch isolierenden Werkstoff hergestellt und umfasst zumindest im Bereich des Spaltes einen elektrisch leitfähigen, insbesondere metallischen, Werkstoff. Eine derartige Lüfterhaube ist eine in der elektrischen rotierenden Maschine bereits vorhandene Komponente, mit welcher die Auswerteeinrichtung leicht verbindbar ist. Daher wird eine einfache und kostengünstige Lagerstromüberwachung ermöglicht.

Bei einer weiteren vorteilhaften Ausführungsform weist die Welle stirnseitig ein gestuftes Ende auf, wobei die Lüfterhaube zumindest im Bereich des Spaltes eine elektrisch leitfähige, insbesondere metallische, Beschichtung aufweist und wobei durch das gestufte Ende der Welle und die Beschichtung der Lüfterhaube eine drehwinkelabhängige Messkapazität zur Ermittlung einer Drehzahl der elektrischen rotierenden Maschine ausgebildet ist, wobei mittels der drehwinkelabhängigen Messkapazität eine Drehzahl der elektrischen rotierenden Maschine ermittelbar ist. Eine Frequenz einer Kapazitätsveränderung der drehwinkelabhängigen Messkapazität ist proportional zur Drehzahl. Die Beschichtung ist insbesondere als Metallisierung ausgebildet, um kostengünstig und einfach eine gute Leitfähigkeit zu erzielen. Sie enthält beispielsweise Kupfer, Silber, Gold und/oder Aluminium. Eine drehwinkelabhängige Messkapazität wird insbesondere durch eine drehwinkelabhängige Strukturierung erzielt, wobei die Metallisierung beispielsweise aufgedampft oder mit einem additiven Fertigungsverfahren aufgetragen wird. Da Lagerstromereignisse insbesondere im mittleren Drehzahlbereich die Lebensdauer der Lager besonders negativ beeinflussen, ist es vorteilhaft, wenn zusätzlich zur Lagerstromerfassung eine Drehzahl ermittelt wird. Eine derartige kapazitive Drehzahlerfassung ist leicht und kostengünstig zu realisieren.

Besonders vorteilhaft ist die Messkapazität durch einen Spalt zwischen einer zumindest teilweise elektrisch leitfähigen, insbesondere metallischen, und elektrisch leitend mit der Welle verbundenen Deckscheibe eines Lüfterrades und einem ersten Teil des Gehäuses, welche über ein isolierendes Element mit einem zweiten Teil des Gehäuses verbunden ist, ausgebildet. Die Verbindung über das isolierende Element erfolgt punktuell oder flächig. Ein isolierendes Element ist beispielsweise aus einem dielektrischen Werkstoff hergestellt. Dielektrische Werkstoffe sind beispielsweise thermoplastische Kunststoffe wie Polyethylen, Duroplaste wie Epoxidharz oder keramische Werkstoffe wie Aluminiumoxid. Ein elektrisch leitfähiger Werkstoff weist eine elektrische Leitfähigkeit von mindestens 1 10⁶ S/m auf. Ein elektrisch leitfähiger Werkstoff ist beispielsweise ein Metall oder ein elektrisch leitfähiger Kunststoff. Alternativ ist die Lüfterhaube aus einem elektrisch isolierenden Werkstoff hergestellt und umfasst zumindest im Bereich des Spaltes einen elektrisch leitfähigen, insbesondere metallischen, Werkstoff. Ein derartiges Lüfterrad mit einer Deckscheibe und ein Gehäuse sind in der elektrischen rotierenden Maschine bereits vorhandene Komponente, wobei die Auswerteeinrichtung leicht mit dem Gehäuse verbindbar ist. Daher wird eine einfache und kostengünstige Lagerstromüberwachung ermöglicht.

Bei einer weiteren vorteilhaften Ausführungsform weisen die Deckscheibe des Lüfterrades und der erste Teil des Gehäuses, zumindest im Bereich des Spaltes, eine elektrisch leitfähige, insbesondere metallische, Beschichtung auf, durch welche eine drehwinkelabhängige Messkapazität zur Ermittlung einer Drehzahl der elektrischen rotierenden Maschine ausgebildet ist, wobei mittels der drehwinkelabhängigen Messkapazität eine Drehzahl der elektrischen rotierenden Maschine ermittelbar ist. Die Beschichtung der Deckscheibe und des ersten Teils des Gehäuses sind insbesondere als Metallisierung ausgebildet, um kostengünstig und einfach eine gute Leitfähigkeit zu erzielen. Sie enthält beispielsweise Kupfer, Silber, Gold und/oder Aluminium. Eine drehwinkelabhängige Messkapazität wird insbesondere durch eine drehwinkelabhängige Strukturierung erzielt, wobei die Metallisierung beispielsweise aufgedampft oder mit einem additiven Fertigungsverfahren aufgetragen wird. Da Lagerstromereignisse insbesondere im mittleren Drehzahlbereich die Lebensdauer der Lager besonders negativ beeinflussen, ist es vorteilhaft, wenn zusätzlich zur Lagerstromerfassung eine Drehzahl ermittelt wird. Eine derartige kapazitive Drehzahlerfassung ist leicht und kostengünstig zu realisieren.

In einer bevorzugten Ausgestaltung weist die Anordnung eine, insbesondere berührungsfreie, Labyrinthdichtung mit einem inneren Ring und einem äußeren Ring auf, wobei der innere Ring, insbesondere drehfest, mit der Welle verbundenen ist, wobei der äußere Ring elektrisch isoliert mit dem Gehäuse verbunden ist und wobei die Messkapazität durch einen Spalt zwischen dem inneren Ring und dem äußeren Ring der Labyrinthdichtung ausgebildet ist. Die Labyrinthdichtung, welche auch Spaltdichtung genannt wird, ist insbesondere berührungsfrei und dadurch verschleißfrei. Der äußere Ring und der innere Ring sind beispielsweise aus einem metallischen Werkstoff hergestellt. Die elektrisch isolierte Verbindung des äußeren Rings mit dem Gehäuse erfolgt insbesondere mit Hilfe eines dielektrischen Werkstoffs. Eine derartige Labyrinthdichtung ist eine in der elektrischen rotierenden Maschine bereits vorhandene Komponente, wobei die Auswerteeinrichtung leicht mit dem äußeren Ring verbindbar ist. Daher wird eine einfache und kostengünstige Lagerstromüberwachung ermöglicht.

Besonders vorteilhaft weist die Anordnung einen zumindest teilweise elektrisch leitfähigen Lagerdeckel auf, welcher elektrisch isoliert mit dem Gehäuse verbunden ist, wobei die Messkapazität durch einen Spalt zwischen der Welle und dem Lagerdeckel ausgebildet ist. Die elektrisch isolierte Verbindung des Lagerdeckels mit dem Gehäuse erfolgt insbesondere mit Hilfe eines dielektrischen Werkstoffs. Ein derartiger Lagerdeckel ist eine in der elektrischen rotierenden Maschine bereits vorhandene Komponente, wobei die Auswerteeinrichtung leicht mit dem Lagerdeckel verbindbar ist. Daher wird eine einfache und kostengünstige Lagerstromüberwachung ermöglicht.

Im Folgenden wird die Erfindung anhand der in den Figuren dargestellten Ausführungsbeispiele näher beschrieben und erläutert.

Es zeigen:
- FIG 1: eine schematische Darstellung einer ersten Ausgestaltung einer Anordnung mit einer elektrischen rotierenden Maschine,
- FIG 2: eine schematische Darstellung eines gestuften Wellenendes,
- FIG 3: eine schematische Darstellung einer elektrisch leitfähigen, insbesondere metallischen, Beschichtung der Lüfterhaube,
- FIG 4: eine schematische Darstellung einer zweiten Ausgestaltung einer Anordnung mit einer elektrischen rotierenden Maschine,
- FIG 5: eine schematische Darstellung einer dritten Ausgestaltung einer Anordnung mit einer elektrischen rotierenden Maschine,
- FIG 6: eine schematische Darstellung einer elektrisch leitfähigen, insbesondere metallischen, Beschichtung des Gehäuses,
- FIG 7: eine schematische Darstellung einer Deckscheibe eines Lüfterrades,
- FIG 8: eine schematische Darstellung einer vierten Ausgestaltung einer Anordnung mit einer elektrischen rotierenden Maschine und
- FIG 9: eine schematische Darstellung einer fünften Ausgestaltung einer Anordnung mit einer elektrischen rotierenden Maschine.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

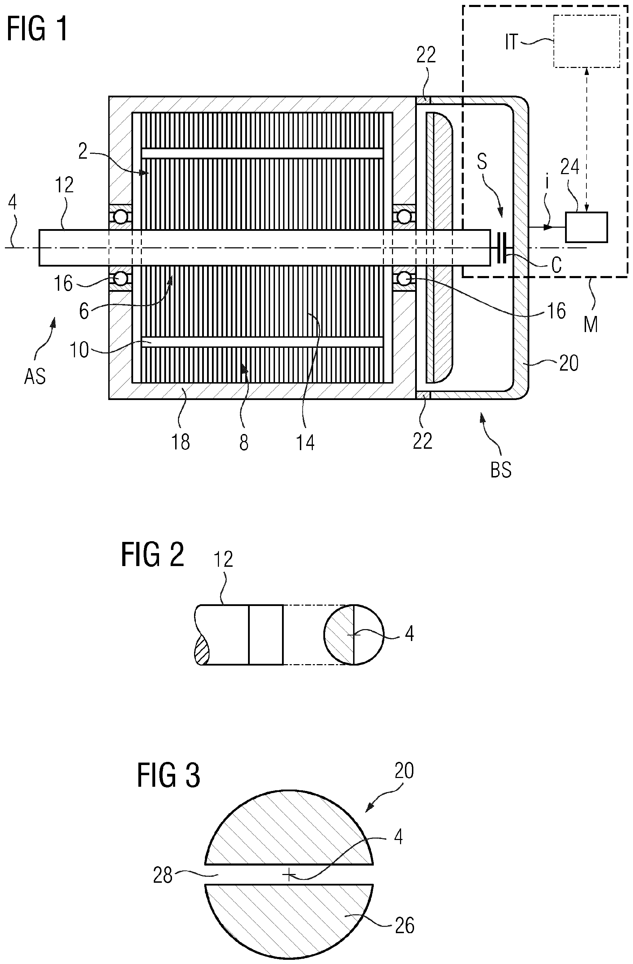

FIG 1 zeigt eine schematische Darstellung einer ersten Ausgestaltung einer Anordnung mit einer elektrischen rotierenden Maschine 2 in einer Querschnittsdarstellung. Die elektrische rotierende Maschine 2, die mit einer Leistung von zumindest einem Kilowatt betreibbar ist, ist als Synchronmaschine oder Asynchronmaschinen ausgeführt und als Motor und/oder als Generator verwendbar. Optional umfasst die Anordnung einen Umrichter, der aus Gründen der Übersichtlichkeit in FIG 1 nicht dargestellt ist, mit welchem die elektrische rotierende Maschine 2 betrieben wird.

Die elektrische rotierende Maschine 2 weist einen um eine Rotationsachse 4 rotierbaren Rotor 6 und einen Stator 8 auf, wobei der Stator 8 beispielhaft radial außerhalb des Rotors 6 angeordnet ist. Die Rotationsachse 4 definiert eine Axialrichtung, eine Radialrichtung und eine Umfangsrichtung. Zwischen dem Rotor 6 und dem Stator 8 ist ein Fluidspalt 10, der insbesondere als Luftspalt ausgeführt ist, ausgebildet. Der Rotor 6 weist eine Welle 12 und ein Blechpaket 14, welches aus einem ferromagnetischen Material, beispielsweise Stahl oder Eisen, hergestellt ist, auf, wobei das Blechpaket 14 drehfest mit der Welle 12 verbunden ist. Die Welle 12 des Rotors 6 ist über Lager 16 drehbar gehalten. Der Rotor 6 und der Stator 8 sind in einem geschlossenen Gehäuse 18 untergebracht. Die Lager 16 sind elektrisch leitfähig oder elektrisch isoliert mit dem Gehäuse 18 verbunden. Die elektrische rotierende Maschine 2 weist darüber hinaus eine Antriebsseite AS und eine Nicht-Antriebsseite BS auf, wobei an der Nicht-Antriebsseite BS eine elektrisch leitfähige, insbesondere metallische, Lüfterhaube 20 angeordnet ist, welche über zumindest ein isolierendes Element 22 elektrisch isoliert mit dem Gehäuse 18 verbunden ist.

Die Anordnung umfasst darüber hinaus eine Messeinrichtung M zur Lagerstrommessung während des Betriebes der elektrischen rotierenden Maschine 2 mit einer Auswerteeinrichtung 24 und einer Messkapazität C. Die Messkapazität C ist stirnseitig durch einen Spalt S zwischen der Welle 12 und der elektrisch leitfähigen Lüfterhaube 20 ausgebildet. Ein elektrisch leitfähiger Werkstoff weist eine elektrische Leitfähigkeit von mindestens 1 10⁶ S/m auf. Ein elektrisch leitfähiger Werkstoff ist beispielsweise ein Metall oder ein elektrisch leitfähiger Kunststoff. Insbesondere ist die Messkapazität C als Plattenkondensator ausgebildet. Die beiden Elektroden des Plattenkondensators sind durch die Welle 12 und das Gehäuse 18 bereitgestellt, wobei der, insbesondere axiale, Spalt S zwischen den Elektroden als Dielektrikum fungiert. Alternativ ist die Lüfterhaube 20 aus einem elektrisch isolierenden Werkstoff hergestellt und umfasst zumindest im Bereich des Spaltes S einen elektrisch leitfähigen, insbesondere metallischen, Werkstoff. Beispielsweise ist die Lüfterhaube 20 zumindest auf einer der elektrischen rotierenden Maschine 2 zugewandten Seite mit einem elektrisch leitfähigen, insbesondere metallischen, Werkstoff beschichtet.

Darüber hinaus ist die Auswerteeinrichtung 24 mit der lüfterhaubenseitigen Elektrode der Messkapazität C verbunden, sodass im Falle eines Lagerstromereignisses ein durch die Messkapazität C fließender elektrischer Verschiebestrom i von der Auswerteeinrichtung 24 erfassbar ist. Daraufhin wird ein einen Lagerstromfluss anzeigendes Messsignal erzeugt, falls der Verschiebestrom i oder eine mit diesem Verschiebestrom i gebildete Messgröße ein vorgegebenes Auslösekriterium erfüllt. Die Auswerteeinrichtung 24 weist beispielsweise einen Strom-Spannungs-Wandler mit einer Schutzschaltung auf, wobei der Strom-Spannungs-Wandler eine Spannung ausgibt, welche proportional zum Verschiebestrom i ist.

Optional wird das Messsignal zur weiteren Verarbeitung an eine zentrale IT-Infrastruktur IT gesendet. Eine zentrale IT-Infrastruktur IT ist beispielsweise mindestens ein lokales Computersystem und/oder mindestens ein, insbesondere cloudbasiertes, IoT-System. Die zentrale IT-Infrastruktur stellt Speicherplatz, Rechenleistung und/oder Anwendungssoftware bereit. In einem IoT-System werden Speicherplatz, Rechenleistung und/oder Anwendungssoftware als Dienstleistung über das Internet zur Verfügung gestellt. Optional findet eine Auswertung zumindest teilweise in der zentralen IT-Infrastruktur IT statt.

FIG 2 zeigt eine schematische Darstellung eines stirnseitigen gestuften Wellenendes, wobei die Stufe, beispielhaft durch die Rotationsachse 4 verlaufend, an der Nicht-Antriebsseite BS angeordnet ist. Die weitere Ausführung der Welle 12 in FIG 2 entspricht der Ausführung in FIG 1.

FIG 3 zeigt eine schematische Darstellung einer elektrisch leitfähigen, insbesondere metallischen, Beschichtung 26 der Lüfterhaube 20, welche, bezogen auf die Rotationsachse 4 eine Strukturierung aufweist und punktsymmetrisch zur Rotationsachse 4 ist. Die Strukturierung ist drehwinkelabhängig ausgestaltet. Die Beschichtung 26 ist insbesondere als Metallisierung ausgebildet und enthält beispielsweise Kupfer, Silber, Gold und/oder Aluminium und wird beispielsweise aufgedampft oder mit einem additiven Fertigungsverfahren aufgetragen. Beispielhaft ist eine kreisförmige Metallisierung aus Kupfer dargestellt, die durch einen elektrisch isolierenden durch die Rotationsachse 4 verlaufenden Pfad 28 in zwei voneinander elektrisch isolierte Kreissegmente geteilt wird. Zur Lagerstrommessung wird die Auswerteeinrichtung 24 mit einem der Kreissegmente verbunden. Alternativ umfasst die Beschichtung 26 nur eines der Kreissegmente, wobei die Auswerteeinrichtung 24 zur Lagerstrommessung mit dem Kreissegment verbunden wird. Zusammen mit dem gestuften Wellenende aus FIG 2 wird in der elektrischen rotierenden Maschine 2 eine drehwinkelabhängige Messkapazität C ausgebildet, welche zu einer kapazitiven Ermittlung einer Drehzahl der elektrischen rotierenden Maschine 2 verwendbar ist. Da Lagerstromereignisse insbesondere im mittleren Drehzahlbereich die Lebensdauer der Lager 16 besonders negativ beeinflussen, ist es vorteilhaft, wenn zusätzlich zur Lagerstromerfassung eine Drehzahl ermittelt wird. Die weitere Ausführung der Lüfterhaube 20 in FIG 3 entspricht der Ausführung in FIG 1.

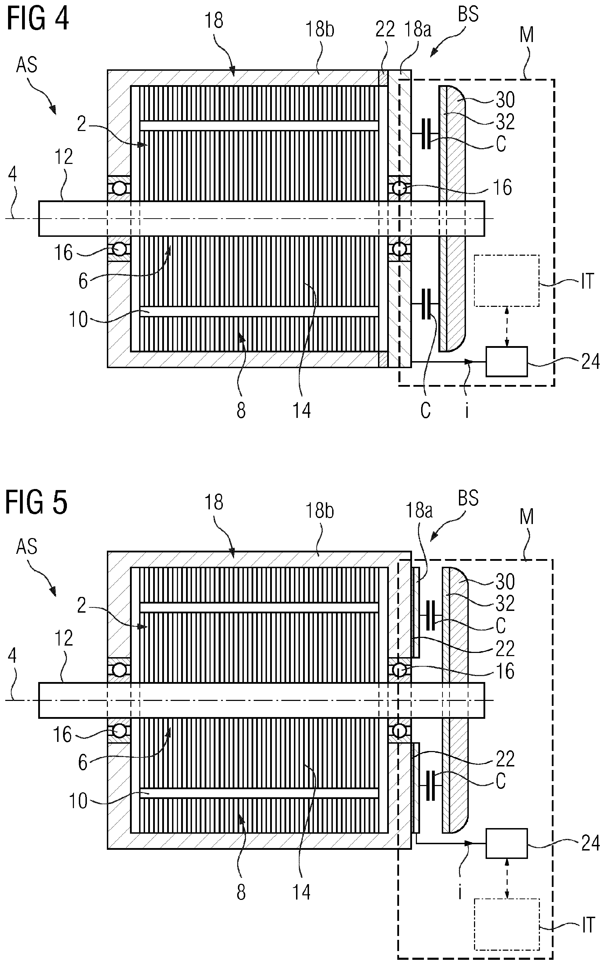

FIG 4 zeigt eine schematische Darstellung einer zweiten Ausgestaltung einer Anordnung mit einer elektrischen rotierenden Maschine 2, welche ein Lüfterrad 30 aufweist, das zumindest teilweise aus einem elektrisch leitfähigen, insbesondere metallischen, Werkstoff hergestellt ist. Das Lüfterrad 30 weist eine Deckscheibe 32 auf, welche zumindest teilweise metallisiert und leitend mit der Welle 12 verbunden ist. Das Gehäuse 18 umfasst einen ersten Teil 18a und einen zweiten Teil 18b, wobei zumindest der erste Teil 18a des Gehäuses 18 aus einem elektrisch leitfähigen, insbesondere metallischen, Werkstoff hergestellt ist und die Teile 18a, 18b über zumindest ein isolierendes Element 22 elektrisch isoliert verbunden sind. Der elektrisch leitfähige, insbesondere metallische, Werkstoff enthält beispielsweise Kupfer, Silber, Gold und/oder Aluminium. Zur Lagerstrommessung ist eine Messkapazität C durch einen Spalt S zwischen der Deckscheibe 32 des Lüfterrades 30 und dem ersten Teil 18a des Gehäuses 18 ausgebildet. Die Anordnung umfasst darüber hinaus eine Auswerteeinrichtung 24, welche mit dem ersten Teil 18b des Gehäuses 18 verbunden ist, sodass im Falle eines Lagerstromereignisses ein durch die Messkapazität C fließender elektrischer Verschiebestrom i von der Auswerteeinrichtung 24 erfassbar ist. Die weitere Ausführung der Anordnung in FIG 4 entspricht der Ausführung in FIG 1.

FIG 5 zeigt eine schematische Darstellung einer dritten Ausgestaltung einer Anordnung mit einer elektrischen rotierenden Maschine 2. Der erste Teil 18a des Gehäuses 18 ist flächig und über zumindest ein isolierendes Element 22 elektrisch isoliert mit dem zweiten Teil 18b des Gehäuses verbunden, sodass die Messkapazität C durch einen Spalt S zwischen der Deckscheibe 32 des Lüfterrades 30 und dem ersten Teil 18a des Gehäuses 18 ausgebildet ist. Beispielsweise ist der erste Teil 18a des Gehäuses 18 als Metallblech ausgestaltet. Alternativ wird der erste Teil 18a des Gehäuses 18 aufgedampft oder mit einem additiven Fertigungsverfahren aufgetragen. Die weitere Ausführung der Anordnung in FIG 5 entspricht der Ausführung in FIG 4.

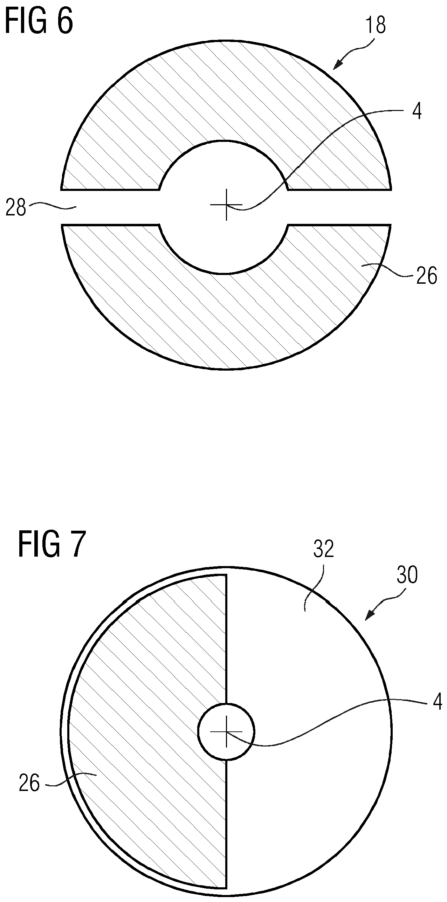

FIG 6 zeigt eine schematische Darstellung einer elektrisch leitfähigen, insbesondere metallischen, Beschichtung 26 des Gehäuses 18, welche eine Strukturierung aufweist und punktsymmetrisch zur Rotationsachse 4 ist, wobei die Strukturierung drehwinkelabhängig ausgestaltet ist. Die Beschichtung 26 ist zumindest ein Teil des ersten Teil 18a des Gehäuses 18 und wird beispielsweise aufgedampft oder mit einem additiven Fertigungsverfahren aufgetragen. Die Beschichtung 26 ist insbesondere als Metallisierung ausgebildet und enthält beispielsweise Kupfer, Silber, Gold und/oder Aluminium. Beispielhaft ist eine kreisringförmige Metallisierung aus Kupfer dargestellt, die durch einen elektrisch isolierenden durch die Rotationsachse 4 verlaufenden Pfad 28 in zwei voneinander elektrisch isolierte Kreisringsegmente geteilt ist. Zur Lagerstrommessung wird die Auswerteeinrichtung 24 mit einem der Kreisringsegmente verbunden. Alternativ umfasst die Beschichtung 26 nur eines der Kreisringsegmente, wobei die Auswerteeinrichtung 24 zur Lagerstrommessung mit dem Kreissegment verbunden wird. Die weitere Ausführung des Gehäuses 18 in FIG 6 entspricht der Ausführung in FIG 5.

FIG 7 zeigt eine schematische Darstellung einer Deckscheibe 32 eines Lüfterrades 30, wobei die Deckscheibe 32 auf einer dem Gehäuse 18 zugewandten Seite eine, insbesondere metallische, Beschichtung 26 aufweist, welche eine Strukturierung aufweist und punktsymmetrisch zur Rotationsachse 4 ist, wobei die Strukturierung drehwinkelabhängig ausgestaltet ist. Insbesondere ist die Beschichtung 26 als Metallisierung ausgebildet, welche Kupfer, Silber, Gold und/oder Aluminium enthält. Beispielhaft ist im Wesentlichen eine Hälfte der Deckscheibe 32 mit der Metallisierung beschichtet. Zusammen mit der elektrisch leitfähigen, insbesondere metallischen, Beschichtung 26 des Gehäuses 18 aus FIG 6 wird in der elektrischen rotierenden Maschine 2 eine drehwinkelabhängige Messkapazität C ausgebildet, welche zu einer kapazitiven Ermittlung einer Drehzahl der elektrischen rotierenden Maschine 2 verwendbar ist. Wie in FIG 3 beschrieben beeinflussen Lagerstromereignisse insbesondere im mittleren Drehzahlbereich die Lebensdauer der Lager 16 besonders negativ, wodurch es vorteilhaft ist, wenn zusätzlich zur Lagerstromerfassung eine Drehzahl ermittelt wird. Die weitere Ausführung des Lüfterrades 30 in FIG 7 entspricht der Ausführung in FIG 5.

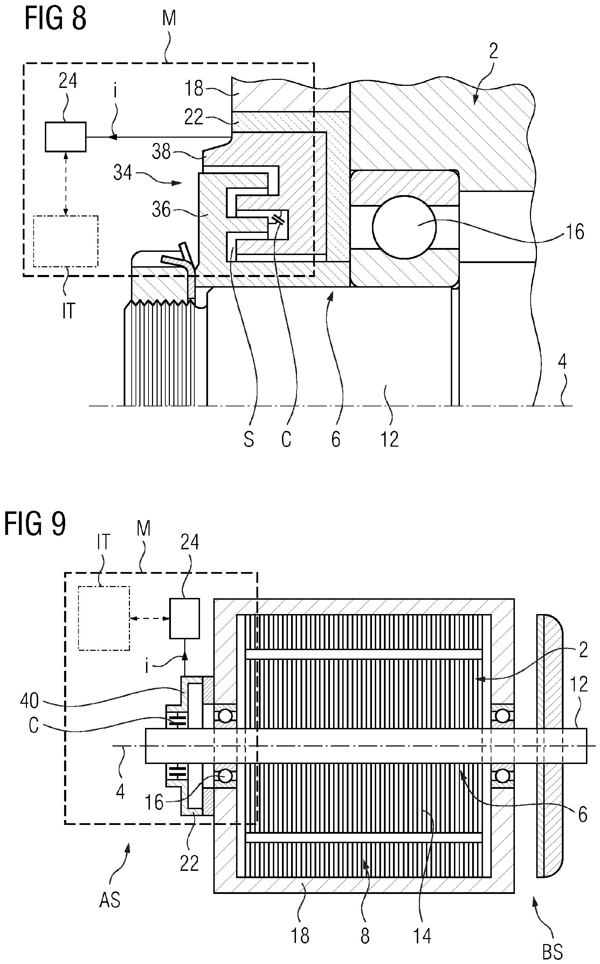

FIG 8 zeigt eine schematische Darstellung einer vierten Ausgestaltung einer Anordnung mit einer elektrischen rotierenden Maschine 2. Die elektrische rotierende Maschine 2 weist eine berührungsfreie und dadurch verschleißfreie Labyrinthdichtung 34 auf, welche einen inneren Ring 36 und einem äußeren Ring 38 umfasst, wobei der innere Ring 36, insbesondere drehfest, mit der Welle 12 verbundenen ist. Der äußeren Ring 38 ist, elektrisch isoliert durch ein isolierendes Element 22, mit dem Gehäuse 18 verbunden, sodass die Messkapazität C durch einen Spalt S, der im Querschnitt mäanderförmig zwischen dem inneren Ring 36 und dem äußeren Ring 38 der Labyrinthdichtung 34 verläuft, ausgebildet ist. Die Anordnung umfasst darüber hinaus eine Auswerteeinrichtung 24, welche mit dem äußeren Ring 38 der Labyrinthdichtung 34 verbunden ist, sodass im Falle eines Lagerstromereignisses ein durch die Messkapazität C fließender elektrischer Verschiebestrom i von der Auswerteeinrichtung 24 erfassbar ist. Die weitere Ausführung der Anordnung in FIG 8 entspricht der Ausführung in FIG 1.

FIG 9 zeigt eine schematische Darstellung einer fünften Ausgestaltung einer Anordnung mit einer elektrischen rotierenden Maschine 2. Die elektrische rotierende Maschine 2 umfasst, beispielhaft an der Antriebsseite AS, einen Lagerdeckel 40, welcher zumindest teilweise aus einem elektrisch leitfähigen, insbesondere metallischen, Werkstoff hergestellt ist. Beispielsweise enthält der Lagerdeckel 40 Stahl, Eisen, Kupfer, Silber, Gold und/oder Aluminium und ist über ein isolierendes Element 22 mit dem Gehäuse 18 verbunden. Die Messkapazität C ist durch einen radialen Spalt S zwischen der Welle 12 und dem Lagerdeckel 40 ausgebildet. Insbesondere ist die Messkapazität C als Zylinderkondensator ausgebildet. Die weitere Ausführung der Anordnung in FIG 9 entspricht der Ausführung in FIG 1.

Zusammenfassend betrifft die Erfindung eine Anordnung mit einer elektrischen rotierenden Maschine 2, die eine in einem Gehäuse 18 mittels zumindest eines Lagers 16 drehbar gelagerte Welle 12 aufweist, und mit einer Messeinrichtung M zur Lagerstromüberwachung, welche eine Messkapazität C und eine Auswerteeinrichtung 24 aufweist, wobei die Messkapazität C durch einen Spalt S zwischen einem stehenden Teil und einem mit der Welle 12 rotierenden Teil der elektrischen rotierenden Maschine 2 ausgebildet ist, wobei die Auswerteeinrichtung 24 dafür ausgelegt ist, im Falle eines Lagerstromereignisses einen durch die Messkapazität C fließenden elektrischen Verschiebestrom i zu erfassen und ein einen Lagerstromfluss anzeigendes Messsignal zu erzeugen, falls der Verschiebestrom i oder eine mit diesem Verschiebestrom i gebildete Messgröße ein vorgegebenes Auslösekriterium erfüllt. Um eine möglichst einfache und kostengünstige Lagerstromüberwachung zu ermöglichen, wird vorgeschlagen, dass die Messkapazität C durch bereits vorhandene Komponenten der elektrischen rotierenden Maschine 2 ausgebildet ist.

## Patentansprüche

1. Anordnung mit einer elektrischen rotierenden Maschine (2), die eine in einem Gehäuse (18) mittels zumindest eines Lagers (16) drehbar gelagerte Welle (12) aufweist, und
mit einer Messeinrichtung (M) zur Lagerstromüberwachung, welche eine Messkapazität (C) und eine Auswerteeinrichtung (24) aufweist,
wobei die Messkapazität (C) durch einen Spalt (S) zwischen einem stehenden Teil und einem mit der Welle (12) rotierenden Teil der elektrischen rotierenden Maschine (2) ausgebildet ist,
wobei die Auswerteeinrichtung (24) dafür ausgelegt ist, im Falle eines Lagerstromereignisses einen durch die Messkapazität (C) fließenden elektrischen Verschiebestrom (i) zu erfassen und
ein einen Lagerstromfluss anzeigendes Messsignal zu erzeugen, falls der Verschiebestrom (i) oder eine mit diesem Verschiebestrom (i) gebildete Messgröße ein vorgegebenes Auslösekriterium erfüllt,
**dadurch gekennzeichnet, dass**
die Messkapazität (C) durch bereits vorhandene Komponenten der elektrischen rotierenden Maschine (2) ausgebildet ist.

2. Anordnung nach Anspruch 1,
wobei die Messkapazität (C), insbesondere stirnseitig, durch einen Spalt (S) zwischen der Welle (12) und einer, zumindest im Bereich des Spaltes (S), elektrisch leitfähigen, insbesondere metallischen, Lüfterhaube (20), welche elektrisch isoliert mit dem Gehäuse (18) verbunden ist, ausgebildet ist.

3. Anordnung nach Anspruch 2,
wobei die Welle (12) stirnseitig ein gestuftes Ende aufweist,
wobei die Lüfterhaube (20) zumindest im Bereich des Spaltes (S) eine elektrisch leitfähige, insbesondere metallische, Beschichtung (23) aufweist und
wobei durch das gestufte Ende der Welle (12) und die Beschichtung (23) der Lüfterhaube (20) eine drehwinkelabhängige Messkapazität (C) zur Ermittlung einer Drehzahl der elektrischen rotierenden Maschine (2) ausgebildet ist,
wobei mittels der drehwinkelabhängigen Messkapazität (C) eine Drehzahl der elektrischen rotierenden Maschine (2) ermittelbar ist.

4. Anordnung nach Anspruch 1,
wobei die Messkapazität (C) durch einen Spalt (S) zwischen einer zumindest teilweise elektrisch leitfähigen, insbesondere metallischen, und elektrisch leitend mit der Welle (12) verbundenen Deckscheibe (32) eines Lüfterrades (30) und einem ersten Teil (18a) des Gehäuses (18), welche über ein isolierendes Element (22) mit einem zweiten Teil (18b) des Gehäuses (18) verbunden ist, ausgebildet ist.

5. Anordnung nach Anspruch 4,
wobei die Deckscheibe (32) des Lüfterrades (30) und der erste Teil (18a) des Gehäuses (18), zumindest im Bereich des Spaltes (S), eine elektrisch leitfähige, insbesondere metallische, Beschichtung (23) aufweisen,
durch welche eine drehwinkelabhängige Messkapazität (C) zur Ermittlung einer Drehzahl der elektrischen rotierenden Maschine (2) ausgebildet ist,
wobei mittels der drehwinkelabhängigen Messkapazität (C) eine Drehzahl der elektrischen rotierenden Maschine (2) ermittelbar ist.

6. Anordnung nach Anspruch 1,
aufweisend eine, insbesondere berührungsfreie, Labyrinthdichtung (34) mit einem inneren Ring (36) und einem äußeren Ring (38), wobei der innere Ring (36), insbesondere drehfest, mit der Welle (12) verbundenen ist,
wobei der äußere Ring (38) elektrisch isoliert mit dem Gehäuse (18) verbunden ist und
wobei die Messkapazität (C) durch einen Spalt (S) zwischen dem inneren Ring (36) und dem äußeren Ring (38) der Labyrinthdichtung (34) ausgebildet ist.

7. Anordnung nach Anspruch 1,
aufweisend einen zumindest teilweise elektrisch leitfähigen Lagerdeckel (40), welcher elektrisch isoliert mit dem Gehäuse (18) verbunden ist,
wobei die Messkapazität (C) durch einen Spalt (S) zwischen der Welle (12) und dem Lagerdeckel (40) ausgebildet ist.

8. Verfahren zur Lagerstromüberwachung einer elektrischen rotierenden Maschine (2), die eine in einem Gehäuse (18) mittels zumindest eines Lagers (16) drehbar gelagerte Welle (12) aufweist, mittels einer Messeinrichtung (M),
welche eine Messkapazität (C) und eine Auswerteeinrichtung (24) aufweist,
wobei die Messkapazität (C) durch einen Spalt (S) zwischen einem stehenden Teil und einem mit der Welle (12) rotierenden Teil der elektrischen rotierenden Maschine (2) ausgebildet wird,
wobei durch die Auswerteeinrichtung (24) im Falle eines Lagerstromereignisses ein durch die Messkapazität (C) fließender elektrischer Verschiebestrom (i) erfasst wird und
ein einen Lagerstromfluss anzeigendes Messsignal erzeugt wird, falls der Verschiebestrom (i) oder eine mit diesem Verschiebestrom (i) gebildete Messgröße ein vorgegebenes Auslösekriterium erfüllt,
**dadurch gekennzeichnet, dass**
bereits vorhandene Komponenten der elektrischen rotierenden Maschine (2) als Messkapazität (C) verwendet werden.

9. Verfahren nach Anspruch 8,
wobei die Messkapazität (C), insbesondere stirnseitig, durch einen Spalt (S) zwischen der Welle (12) und einer, zumindest im Bereich des Spaltes (S), metallischen Lüfterhaube (20), welche elektrisch isoliert mit dem Gehäuse (18) verbunden ist, ausgebildet wird.

10. Verfahren nach Anspruch 9,
wobei die Welle (12) stirnseitig ein gestuftes Ende aufweist, wobei die Lüfterhaube (20) zumindest im Bereich des Spaltes (S) eine elektrisch leitfähige, insbesondere metallische, Beschichtung (23) aufweist und
wobei durch das gestufte Ende der Welle (12) und die Beschichtung (23) der Lüfterhaube (20) eine drehwinkelabhängige Messkapazität (C) zur Ermittlung einer Drehzahl der elektrischen rotierenden Maschine (2) ausgebildet wird,
wobei mittels der drehwinkelabhängigen Messkapazität (C) eine Drehzahl der elektrischen rotierenden Maschine (2) ermittelt wird.

11. Verfahren nach Anspruch 8,
wobei die Messkapazität (C) durch einen Spalt (S) zwischen einer zumindest teilweise elektrisch leitfähigen, insbesondere metallischen, und elektrisch leitend mit der Welle (12) verbundenen Deckscheibe (32) eines Lüfterrades (30) und einem ersten Teil (18a) des Gehäuses (18), welche über ein isolierendes Element (22) mit einem zweiten Teil (18b) des Gehäuses (18) verbunden ist, ausgebildet wird.

12. Anordnung nach Anspruch 11,
wobei die Deckscheibe (32) des Lüfterrades (30) und der erste Teil (18a) des Gehäuses (18), zumindest im Bereich des Spaltes (S), eine elektrisch leitfähige, insbesondere metallische, Beschichtung (23) aufweisen,
durch welche eine drehwinkelabhängige Messkapazität (C) zur Ermittlung einer Drehzahl der elektrischen rotierenden Maschine (2) ausgebildet wird,
wobei mittels der drehwinkelabhängigen Messkapazität (C) eine Drehzahl der elektrischen rotierenden Maschine (2) ermittelt wird.

13. Verfahren nach Anspruch 8,
aufweisend eine, insbesondere berührungsfreie, Labyrinthdichtung (34) mit einem inneren Ring (36) und einem äußeren Ring (38), wobei der innere Ring (36), insbesondere drehfest, mit der Welle (12) verbundenen ist,
wobei der äußere Ring (38) elektrisch isoliert mit dem Gehäuse (18) verbunden ist und
wobei die Messkapazität (C) durch einen Spalt (S) zwischen dem inneren Ring (36) und dem äußeren Ring (38) der Labyrinthdichtung (34) ausgebildet wird.

14. Verfahren nach Anspruch 8,
aufweisend einen zumindest teilweise elektrisch leitfähigen Lagerdeckel (40), welcher elektrisch isoliert mit dem Gehäuse (18) verbunden ist,
wobei die Messkapazität (C) durch einen Spalt (S) zwischen der Welle (12) und dem Lagerdeckel (40) ausgebildet wird.

15. Verwendung bereits vorhandener Komponenten einer elektrischen rotierenden Maschine (2) zur Ausbildung einer Messkapazität (C) bei einer Lagerstromüberwachung der elektrischen rotierenden Maschine (2).
